# EUROPEAN PATENT SPECIFICATION

(11) **EP 2 221 204 B1**
(45) Date of publication and mention of the grant of the patent: **21.12.2011**
(21) Application number: 09153128.5
(22) Date of filing: 18.02.2009
(51) Int. Cl.: B60K 8/00, B60K 16/00, F02B 43/10

(54) **Oxyhydrogen Vehicle**
Knallgasfahrzeug
Véhicule à l'oxyhydrogène

(43) Date of publication of application: 25.08.2010
(73) Proprietor: Yu Chuan Technology Enterprise Co., Ltd, Kaohsiung County (TW)
(72) Inventor: Lin, Wen-Chang, Lin-Yuan Hsiang, Kaohsiung County (TW)
(74) Representative: Jenkins, Peter David

(56) References cited:
- GB-A- 2 267 878
- TW-U- M 313 627
- US-A1- 2007 138 006
- US-A1- 2008 190 383

## Description

The present invention relates to an oxyhydrogen vehicle, more particularly to an oxyhydrogen vehicle provided with an auxiliary electricity generating unit.

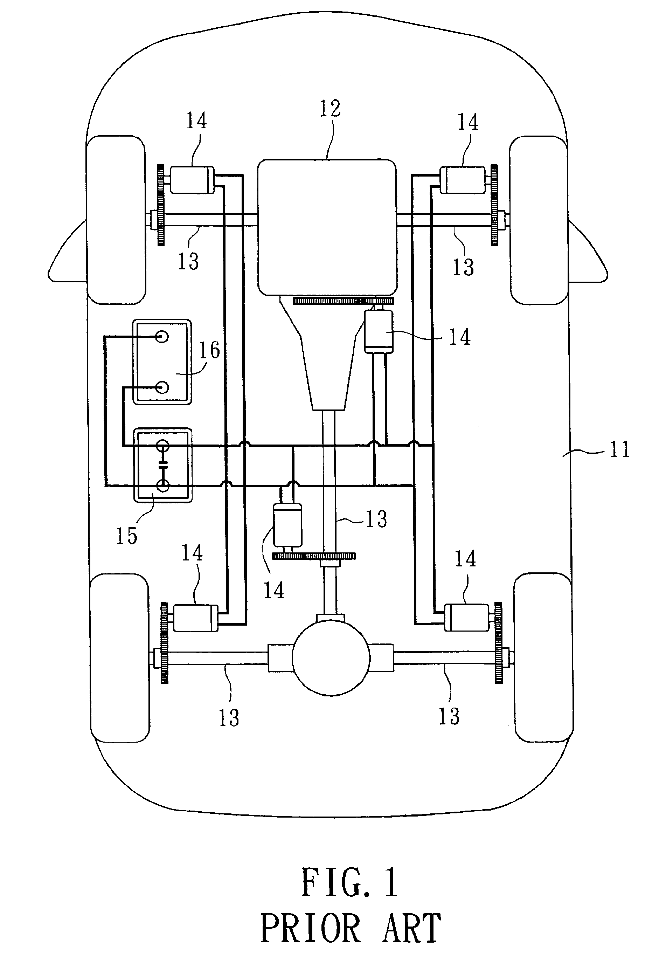

Referring to Figure 1, Taiwanese Utility Model Publication No. 313627 discloses an oxyhydrogen vehicle that includes: a vehicle body 11; an engine unit 12 disposed on the vehicle body 11; a plurality of transmission shafts 13 disposed on the vehicle body 11; a plurality of alternators 14 disposed on the vehicle body 11 and driven by the transmission shafts 13 to generate electric power for charging an additional battery 15 electrically connected thereto; and an electrolytic converter 16 electrically connected to the additional battery 15 and utilizing the electric power therefrom to electrolytically convert an electrolyte into oxyhydrogen gas. Further, the engine unit 12 mixes the oxyhydrogen gas and combustible fuel to result in hybrid fuel, and a cylinder block thereof provides a mechanical power output from combustion of the hybrid fuel.

However, when a vehicle runs at a fast speed, fuel consumption of the engine unit 12 increases, but the electrolytic converter 16 cannot correspondingly provide an appropriate amount of oxyhydrogen gas for generating the hybrid fuel required by the engine unit 12. Moreover, the plurality of alternators 14 and the additional battery 15 increase an overall weight of the vehicle, such that the fuel consumption correspondingly increases.

Therefore, an object of the present invention is to provide an oxyhydrogen vehicle provided with an auxiliary electricity generating unit that is adapted to be driven by renewable energy resources and that generates an electrical output for charging a storage battery which provides electric power to an oxyhydrogen generating unit.

Accordingly, an oxyhydrogen vehicle of the present invention includes an oxyhydrogen generating unit for electrolytically converting an electrolyte into oxyhydrogen gas, a combustible fuel supply unit for storing combustible fuel, an engine unit coupled to the oxyhydrogen generating unit and the combustible fuel supply unit, and an electric power supply system electrically connected to the oxyhydrogen generating unit for providing electric power thereto.

The engine unit mixes the oxyhydrogen gas from the oxyhydrogen generating unit and the combustible fuel from the combustible fuel supply unit to result in hybrid fuel, and provides a mechanical power output from combustion of the hybrid fuel.

The electric power supply system includes: a storage battery; an alternator coupled to and driven by the engine unit so as to generate an electrical output, and electrically connected to the storage battery for charging the storage battery; a current controller electrically connecting the storage battery and the alternator to the oxyhydrogen generating unit for controlling electric current flow to the oxyhydrogen generating unit; and an auxiliary electricity generating unit electrically connected to the storage battery, and adapted to be driven by renewable energy resources selected from the group consisting of solar energy, wind energy and combinations thereof so as to generate an electrical output for charging the storage battery.

Other features and advantages of the present invention will become apparent in the following detailed description of the preferred embodiment with reference to the accompanying drawings, of which:
Figure 1 is a schematic diagram of an oxyhydrogen vehicle disclosed in Taiwanese Utility Model Publication No. 313627;
Figure 2 is a schematic diagram of the preferred embodiment of an oxyhydrogen vehicle according to the present invention;
Figure 3 is a schematic diagram illustrating an oxyhydrogen generating unit of the preferred embodiment;
Figure 4 is a perspective view illustrating the oxyhydrogen vehicle of the preferred embodiment provided with a wind energy converter and a solar energy converter; and
Figure 5 is a schematic diagram illustrating how oxyhydrogen gas is mixed with combustible fuel in the preferred embodiment.

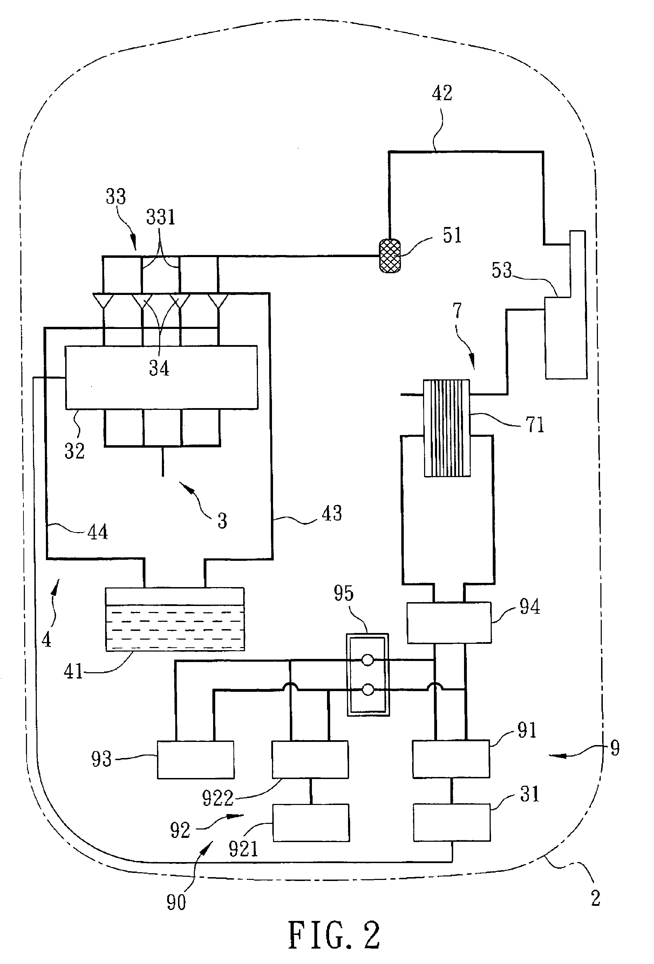

Referring to Figure 2, the preferred embodiment of an oxyhydrogen vehicle according to the present invention is shown to include a vehicle body 2, an oxyhydrogen generating unit 7, a combustible fuel supply unit 4, an engine unit 3 coupled to the oxyhydrogen generating unit 7 and the combustible fuel supply unit 4, and an electric power supply system 9 electrically connected to the oxyhydrogen generating unit 7.

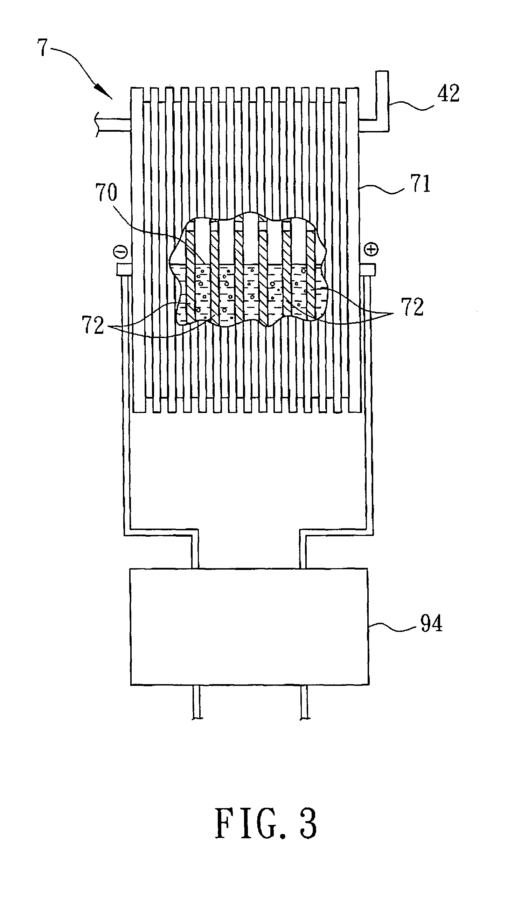

Referring to Figures 2 and 3, the oxyhydrogen generating unit 7 is disposed on the vehicle body 2 and includes an electrolyte container 71 for receiving an electrolyte 70, a plurality of electrode plates 72 disposed in the electrolyte container 71 in spaced apart relation to one another, and an oxyhydrogen gas pipe 42 interconnecting the electrolyte container 71 and the engine unit 3. The oxyhydrogen generating unit 7 is operable to electrolytically convert the electrolyte 70 in the electrolyte container 71 into oxyhydrogen gas in a known manner.

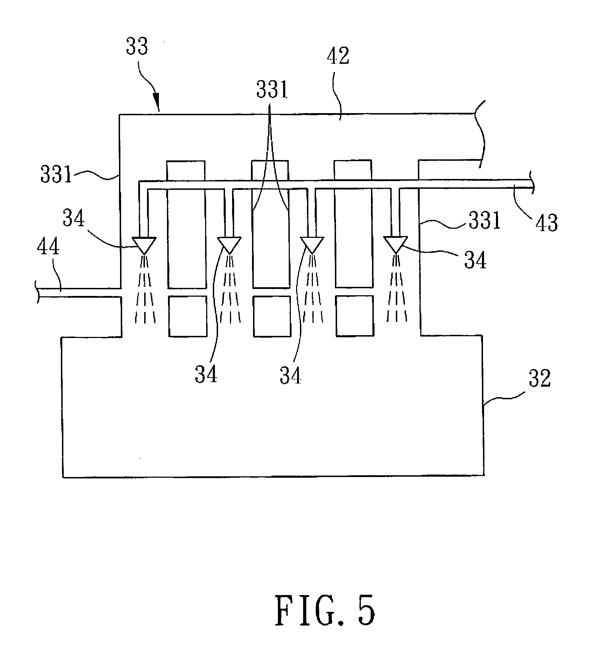

Referring to Figures 2 and 5, the combustible fuel supply unit 4 is disposed on the vehicle body 2 and includes a fuel tank 41 for storing combustible fuel (e.g., a hydrocarbon fuel), a fuel-feeding pipe 43 connected to the engine unit 3 for feeding the combustible fuel to the engine unit 3, and a fuel-returning pipe 44 interconnecting the engine unit 3 and the fuel tank 41 to permit return flow of excess combustible fuel in the engine unit 3 to the fuel tank 41.

The engine unit 3 includes: a cylinder block 32; an intake manifold 33 that is connected to the cylinder block 32, that is provided with passages 331, and that is further connected to the oxyhydrogen gas pipe 42 of the oxyhydrogen generating unit 7 such that the oxyhydrogen gas generated by the oxyhydrogen generating unit 7 is fed into the passages 331; and fuel injectors 34 that are connected to the intake manifold 33, that are further connected to the fuel-feeding pipe 43 of the combustible fuel supply unit 4, and that serve to inject the combustible fuel stored in the combustible supply unit 4 into the passages 331 of the intake manifold 33. Therefore, the oxyhydrogen gas from the oxyhydrogen gas pipe 42 is mixed with the combustible fuel from the fuel injectors 34 in the passages 331 of the intake manifold 33 to result in hybrid fuel that is supplied to the cylinder block 32 for combustion, thereby resulting in a mechanical power output for driving movement of the oxyhydrogen vehicle. The engine unit 3 further includes a driver 31 coupled to the cylinder block 32 so as to be driven thereby.

Preferably, the oxyhydrogen vehicle further includes a gas filter 51 and a vapor filter 53 that are disposed on the oxyhydrogen gas pipe 42. The gas filter 51 is used for filtering the oxyhydrogen gas that is supplied by the oxyhydrogen generating unit 7 to the engine unit 3 so as to enhance purity of the oxyhydrogen gas. The vapor filter 53 is used for removing electrolyte vapor from the oxyhydrogen gas flowing through the oxyhydrogen gas pipe 42.

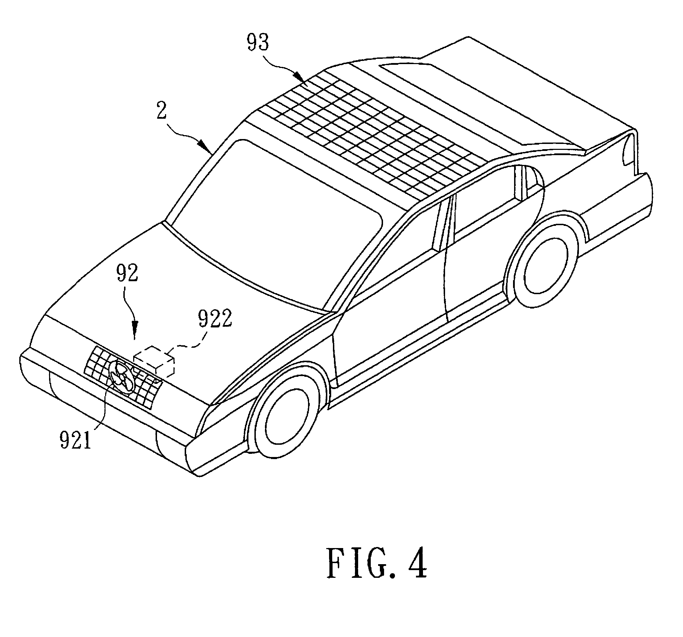

Referring to Figures 2 to 4, the electric power supply system 9 is disposed on the vehicle body 2 and includes: a storage battery 95; an alternator 91 that is coupled to and driven by the driver 31 of the engine unit 3, and that is electrically connected to the storage battery 95 for charging the storage battery 95 in a known manner; a current controller 94 electrically connecting the storage battery 95 and the alternator 91 to the oxyhydrogen generating unit 7 for controlling electric current flow to the oxyhydrogen generating unit 7; and an auxiliary electricity generating unit 90 that is electrically connected to the storage battery 95, and that is adapted to be driven by renewable energy resources, such as solar energy, wind energy and combination thereof, so as to generate an electrical output for charging the storage battery 95.

In this embodiment, the auxiliary electricity generating unit 90 includes a wind energy converter 92 for converting wind energy into the electrical output, and a solar energy converter 93 disposed on the vehicle body 2 for converting solar energy into the electrical output. Preferably, the wind energy converter 92 is mounted on the vehicle body 2 and includes a rotating component 921 for converting the wind energy into a mechanical output, and an electromechanical converter 922 connected to the rotating component 921 and converting the mechanical output of the rotating component 921 into the electrical output that is supplied to the storage battery 95.

By virtue of the current controller 94 of the electric power supply system 9, the oxyhydrogen generating unit 7 is capable of generating an appropriate amount of the oxyhydrogen gas fed into the engine unit 3 to result in adequate supply of the hybrid fuel. In particular, when the oxyhydrogen vehicle of the preferred embodiment runs at a fast speed, and fuel consumption of the engine unit 3 increases, the current controller 94 increases the electric current flow to the oxyhydrogen generating unit 7, such that the oxyhydrogen generating unit 7 is able to generate more oxyhydrogen gas for generating more hybrid fuel.

Moreover, when the alternator 91 does not operate to charge the storage battery 95, the wind energy converter 92 and the solar energy converter 93 of the auxiliary electricity generating unit 90 still can generate the electrical output for charging the storage battery 95. Therefore, it can be ensured that there is a sufficient amount of electric energy stored in the storage battery 95.

In sum, because the engine unit 3 of this invention runs on the hybrid fuel, consumption of the combustible fuel can be reduced, combustion efficiency of the combustible fuel can be enhanced, and carbon monoxide emissions can be reduced.

## Claims

1. An oxyhydrogen vehicle including:
an oxyhydrogen generating unit (7) for electrolytically converting an electrolyte (70) into oxyhydrogen gas;
a combustible fuel supply unit (4) for storing combustible fuel;
an engine unit (3) coupled to said oxyhydrogen generating unit (7) and said combustible fuel supply unit (4), mixing the oxyhydrogen gas from said oxyhydrogen generating unit (7) and the combustible fuel from said combustible fuel supply unit (4) to result in hybrid fuel, and providing a mechanical power output from combustion of the hybrid fuel; and
an electric power supply system (9) electrically connected to said oxyhydrogen generating unit (7) for providing electric power thereto, said electric power supply system (9) including
a storage battery (95), and
an alternator (91) coupled to and driven by said engine unit (3) so as to generate an electrical output, said alternator (91) being electrically connected to said storage battery (95) for charging said storage battery (95);
**characterized in that** said electric power supply system (9) of said oxyhydrogen vehicle further includes
a current controller (94) electrically connecting said storage battery (95) and said alternator (91) to said oxyhydrogen generating unit (7) for controlling electric current flow to said oxyhydrogen generating unit (7), and
an auxiliary electricity generating unit (90) electrically connected to said storage battery (95), and adapted to be driven by renewable energy resources selected from the group consisting of solar energy, wind energy and combinations thereof so as to generate an electrical output for charging said storage battery (95).

2. The oxyhydrogen vehicle as claimed in claim 1, further **characterized in that** said auxiliary electricity generating unit (90) includes a wind energy converter (92) for converting wind energy into the electrical output.

3. The oxyhydrogen vehicle as claimed in claim 2, **characterized by** a vehicle body (2), said wind energy converter (92) being mounted on said vehicle body (2) and including a rotating component (921) for converting the wind energy into a mechanical output, and an electromechanical converter (922) that is connected to said rotating component (921) and that converts the mechanical output of said rotating component into the electrical output that is supplied to said storage battery (95).

4. The oxyhydrogen vehicle as claimed in any one of claims 1 to 3, further **characterized in that** said auxiliary electricity generating unit (90) includes a solar energy converter (93) for converting solar energy into the electrical output.

5. The oxyhydrogen vehicle as claimed in any one of claims 1 to 4, further **characterized by** a gas filter (51) for filtering the oxyhydrogen gas that is supplied by said oxyhydrogen generating unit (7) to said engine unit (3) .

6. The oxyhydrogen vehicle as claimed in any one of claims 1 to 5, further **characterized by** a vapor filter (53) for removing electrolyte vapor from the oxyhydrogen gas supplied to said engine unit (3) by said oxyhydrogen generating unit (7).

7. The oxyhydrogen vehicle as claimed in any one of claims 1 to 6, further **characterized in that** said engine unit (3) includes:
a cylinder block (32);
an intake manifold (33) that is connected to said cylinder block (32), that is provided with passages (331), and that is further connected to said oxyhydrogen generating unit (7) such that the oxyhydrogen gas generated by said oxyhydrogen generating unit (7) is fed into said passages (331); and
fuel injectors (34) that are connected to said intake manifold (33), that are further connected to said combustible fuel supply unit (4), and that serve to inject the combustible fuel stored in said combustible fuel supply unit (4) into said passages (331);
the oxyhydrogen gas from said oxyhydrogen generating unit (7) being mixed with the combustible fuel from said fuel injectors (34) in said passages (331) to result in the hybrid fuel that is supplied to said cylinder block (32).

8. The oxyhydrogen vehicle as claimed in claim 7, further **characterized in that** said engine unit (3) includes a driver (31) coupled to said cylinder block (32) so as to be driven thereby, said driver being further coupled to said alternator (91) for driving said alternator (91) .

## Patentansprüche

1. Wasserstoff-Sauerstoff-Fahrzeug, das aufweist:
eine Wasserstoff-Sauerstoff-Erzeugungseinheit (7) zur elektrolytischen Umsetzung eines Elektrolyten (70) in Wasserstoff-Sauerstoff-Gas,
eine Versorgungseinheit (4) für brennbaren Kraftstoff zur Speicherung von brennbarem Kraftstoff,
eine Motoreinheit (3), die mit der Wasserstoff-Sauerstoff-Erzeugungseinheit (7) und der Versorgungseinheit (4) für brennbaren Kraftstoff gekoppelt ist und das Wasserstoff-Sauerstoff-Gas von der Wasserstoff-Sauerstoff-Erzeugungseinheit (7) und den brennbaren Kraftstoff von der Versorgungseinheit (4) für brennbaren Kraftstoff mischt, um Hybridkraftstoff zu ergeben, und die aus einer Verbrennung des Hybridkraftstoffs eine mechanische Energieabgabe bereitstellt, und
ein elektrisches Energieversorgungssystem (9), das elektrisch mit der Wasserstoff-Sauerstoff-Erzeugungseinheit (7) verbunden ist, um für diese elektrische Energie bereitzustellen, wobei das elektrische Energieversorgungssystem (9)
eine Speicherbatterie (95) und
einen Wechselstromgenerator (91) aufweist, der mit der Motoreinheit (3) gekoppelt ist und durch diese angetrieben wird, um eine elektrische Ausgabe zu erzeugen, wobei der Wechselstromgenerator (91) elektrisch mit der Speicherbatterie (95) verbunden ist, um die Speicherbatterie (95) zu laden,
**dadurch gekennzeichnet, dass** das elektrische Energieversorgungssystem (9) des Wasserstoff-Sauerstoff-Fahrzeugs ferner
eine Stromsteuereinrichtung (94), die die Speicherbatterie (95) und den Wechselstromgenerator (91) mit der Wasserstoff-Sauerstoff-Erzeugungseinheit (7) elektrisch verbindet, um den elektrischen Stromfluss zu der Wasserstoff-Sauerstoff-Erzeugungseinheit (7) zu steuern, und
eine Hilfselektrizitätserzeugungseinheit (90) aufweist, die elektrisch mit der Speicherbatterie (95) verbunden ist und angepasst ist, um durch Quellen erneuerbarer Energie angetrieben zu werden, die aus der Gruppe ausgewählt sind, die aus Solarenergie, Windenergie und Kombinationen von diesen besteht, um eine elektrische Ausgabe zum Laden der Speicherbatterie (95) zu erzeugen.

2. Wasserstoff-Sauerstoff-Fahrzeug nach Anspruch 1, das ferner **dadurch gekennzeichnet ist, dass** die Hilfselektrizitätserzeugungseinheit (90) einen Windenergieumwandler (92) zur Umwandlung von Windenergie in die elektrische Ausgabe aufweist.

3. Wasserstoff-Sauerstoff-Fahrzeug nach Anspruch 2, **gekennzeichnet durch** einen Fahrzeugkörper (2), wobei der Windenergieumwandler (92) an dem Fahrzeugkörper (2) montiert ist und eine sich drehende Komponente (921) zum Umwandeln der Windenergie in eine mechanische Ausgabe aufweist und einen elektromechanischen Umwandler (922), der mit der sich drehenden Komponente (921) verbunden ist und der die mechanische Ausgabe der sich drehenden Komponente in die elektrische Ausgabe umwandelt, die der Speicherbatterie (95) zugeführt wird.

4. Wasserstoff-Sauerstoff-Fahrzeug nach einem der Ansprüche 1 bis 3, das ferner **dadurch gekennzeichnet ist, dass** die Hilfselektrizitätserzeugungseinheit (90) einen Solarenergieumwandler (93) zum Umwandeln von Solarenergie in die elektrische Ausgabe aufweist.

5. Wasserstoff-Sauerstoff-Fahrzeug nach einem der Ansprüche 1 bis 4, das ferner durch einen Gasfilter (51) zum Filtern des Wasserstoff-Sauerstoff-Gases **gekennzeichnet** ist, das durch die Wasserstoff-Sauerstoff-Erzeugungseinheit (7) der Motoreinheit (3) zugeführt wird.

6. Wasserstoff-Sauerstoff-Fahrzeug nach einem der Ansprüche 1 bis 5, das ferner durch einen Dampffilter (53) zur Entfernung von Elektrolytdampf aus dem Wasserstoff-Sauerstoff-Gas **gekennzeichnet** ist, das durch die Wasserstoff-Sauerstoff-Erzeugungseinheit (7) der Motoreinheit (3) zugeführt wird.

7. Wasserstoff-Sauerstoff-Fahrzeug nach einem der Ansprüche 1 bis 6, das ferner **dadurch gekennzeichnet ist, dass** die Motoreinheit (3) aufweist:
einen Zylinderblock (32),
eine Ansaugsammelleitung (33), die mit dem Zylinderblock (32) verbunden ist, die mit Kanälen (331) versehen ist und die ferner in der Weise mit der Wasserstoff-Sauerstoff-Erzeugungseinheit (7) verbunden ist, dass das Wasserstoff-Sauerstoff-Gas, das durch die Wasserstoff-Sauerstoff-Erzeugungseinheit (7) erzeugt wird, in die Kanäle (331) geleitet wird, und
Kraftstoffeinspritzer (34), die mit der Ansaugsammelleitung (33) verbunden sind, die ferner mit der Versorgungseinheit (4) für brennbaren Kraftstoff verbunden sind und die dazu dienen, den brennbaren Kraftstoff, der in der Versorgungseinheit (4) für brennbaren Kraftstoff gespeichert ist, in die Kanäle (331) einzuspritzen,
wobei das Wasserstoff-Sauerstoff-Gas von der Wasserstoff-Sauerstoff-Erzeugungseinheit (7) in den Kanälen (331) mit dem brennbaren Kraftstoff von den Kraftstoffeinspritzern (34) gemischt wird, um den Hybridkraftstoff zu ergeben, der dem Zylinderblock (32) zugeführt wird.

8. Wasserstoff-Sauerstoff-Fahrzeug nach Anspruch 7, das ferner **dadurch gekennzeichnet ist, dass** die Motoreinheit (3) einen Treiber (31) aufweist, der mit dem Zylinderblock (32) gekoppelt ist, um **dadurch** angetrieben zu werden, wobei der Treiber ferner mit dem Wechselstromgenerator (91) zum Antreiben des Wechselstromgenerators (91) gekoppelt ist.

## Revendications

1. Véhicule à oxyhydrogène comprenant :
un module de génération d'oxyhydrogène (7) pour convertir électrolytiquement un électrolyte (70) en gaz oxyhydrogène ;
un module de fourniture de combustible (4) pour stocker un combustible ;
un module moteur (3) couplé au module de génération d'oxyhydrogène (7) et au module de fourniture de combustible (4), mélangeant le gaz oxyhydrogène en provenance du module de génération d'oxyhydrogène (7) et le combustible en provenance du module de fourniture de combustible (4) pour fournir un carburant hybride, et fournissant une sortie de puissance mécanique à partir de la combustion du carburant hybride ; et
un système de fourniture d'énergie électrique (9) connecté électriquement au module de génération d'oxyhydrogène (7) pour lui fournir de l'énergie électrique, le système de fourniture d'énergie électrique (9) comprenant :
une batterie de stockage (95), et
un alternateur (91) couplé au module moteur (3) et entraîné par celui-ci, de façon à produire une sortie électrique, l'alternateur (91) étant électriquement connecté à la batterie de stockage (95) pour charger la batterie de stockage (95) ;
**caractérisé en ce que** le système de fourniture d'énergie électrique (9) du véhicule à oxyhydrogène comprend en outre :
un contrôleur de courant (94) reliant électriquement la batterie de stockage (95) et l'alternateur (91) au module de génération d'oxyhydrogène (7) pour commander le courant électrique en provenance du module de génération d'oxyhydrogène (7), et
un module auxiliaire de génération d'électricité (90) électriquement connecté à la batterie de stockage (95) et adapté à être entraîné par des sources d'énergie renouvelable sélectionnées dans le groupe comprenant l'énergie solaire, l'énergie du vent et des combinaisons de celles-ci de façon à produire une sortie électrique pour charger la batterie de stockage (95).

2. Véhicule à oxyhydrogène selon la revendication 1, **caractérisé en outre en ce que** le module auxiliaire de génération d'électricité (90) comprend un convertisseur d'énergie du vent (92) pour convertir l'énergie du vent en ladite sortie électrique.

3. Véhicule à oxyhydrogène selon la revendication 2, **caractérisé par** un corps de véhicule (2), le convertisseur d'énergie du vent (92) étant monté sur le corps de véhicule (2), et comprenant un composant tournant (921) pour convertir l'énergie du vent en une sortie mécanique, et un convertisseur électromécanique (922) qui est connecté au composant tournant (921) et qui convertit la sortie mécanique du composant tournant en la sortie électrique qui est fournie à la batterie de stockage (95).

4. Véhicule à oxyhydrogène selon l'une quelconque des revendications 1 à 3, **caractérisé en outre en ce que** le module auxiliaire de génération d'électricité (90) comprend un convertisseur d'énergie solaire (93) pour convertir de l'énergie solaire en la sortie électrique.

5. Véhicule à oxyhydrogène selon l'une quelconque des revendications 1 à 4, **caractérisé en outre par** un filtre de gaz (51) pour filtrer le gaz oxyhydrogène qui est fourni par le module de génération d'oxyhydrogène (7) au module moteur (3).

6. Véhicule à oxyhydrogène selon l'une quelconque des revendications 1 à 5, **caractérisé en outre par** un filtre de vapeur (53) pour supprimer la vapeur d'électrolyte du gaz oxyhydrogène fourni au module moteur (3) par le module de génération d'oxyhydrogène (7).

7. Véhicule à oxyhydrogène selon l'une quelconque des revendications 1 à 6, **caractérisé en outre en ce que** le module moteur (3) comprend :
un bloc cylindre (32),
un distributeur d'admission (33) qui est connecté au bloc cylindre (32) et qui est muni d'ouvertures (331), et qui est en outre connecté au module de génération d'oxyhydrogène (7) de sorte que le gaz oxyhydrogène produit par le module de génération d'oxyhydrogène (7) est fourni dans les ouvertures (331) ; et
des injecteurs de combustible (34) qui sont connectés au distributeur d'admission (33) et qui sont en outre connectés au module de fourniture de combustible (4) et qui servent à injecter le combustible stocké dans le module de fourniture de combustible (4) dans les ouvertures (331) ;
le gaz oxyhydrogène en provenance du module de génération d'oxyhydrogène (7) étant mélangé au combustible en provenance des injecteurs de carburant (34) dans les ouvertures (331) pour résulter en un carburant hybride qui est fourni au bloc cylindrique (32).

8. Véhicule à oxyhydrogène selon la revendication 7, **caractérisé en outre en ce que** le module (3) comprend un moyen d'entraînement (31) couplé au bloc cylindre (32) de façon à être entraîné par celui-ci, le moyen d'entraînement étant en outre couplé (91) pour entraîner ledit alternateur (91).
